# FASCICULE DE BREVET EUROPEEN

(11) **EP 1 639 808 B1**
(45) Date de publication et mention de la délivrance du brevet: **11.04.2007**
(21) Numéro de dépôt: 04766077.4
(22) Date de dépôt: 25.06.2004
(51) Int. Cl.: H04N 3/15

(54) **CAPTEUR D IMAGE A BARRETTES LINEAIRES ABOUTEES**
BILDSENSOR MIT LINEAREN ANEINANDERSTOSSENDEN STÄBEN
IMAGE SENSOR HAVING LINEAR ABUTTING BARS

(30) Priorité: 27.06.2003 FR 0307830
(43) Date de publication de la demande: 29.03.2006
(73) Titulaire: E2V SEMICONDUCTORS, 38120 Saint Egreve (FR)
(72) Inventeur: LIGOZAT, Thierry THALES Intellectual Property, F-94117 ARCUEIL (FR); GILI, Bruno THALES Intellectual Property, F-94117 ARCUEIL (FR)
(74) Mandataire: Guérin, Michel
(86) Numéro de dépôt international: PCT/EP2004/051239
(87) Numéro de publication internationale: WO 2005/002208

(56) Documents cités:
- US-A- 4 987 477
- PATENT ABSTRACTS OF JAPAN vol. 0092, no. 34 (E-344), 20 septembre 1985 (1985-09-20) & JP 60 086963 A (RICOH KK), 16 mai 1985 (1985-05-16)

## Description

L'invention concerne la fabrication de capteurs d'image de grande dimension, fonctionnant par défilement relatif entre l'image et le capteur. Il s'agit donc de capteurs linéaires, c'est-à-dire de capteurs comportant une ou plusieurs lignes de détecteurs photosensibles et destinés, au cours du défilement relatif entre l'image et le capteur, à reconstituer une image globale en deux dimensions, à savoir une dimension dans le sens de la ligne de détecteurs photosensibles et une dimension dans le sens de défilement perpendiculaire à cette ligne.

On comprendra que sont inclus dans cette définition les capteurs à barrettes linéaires à plusieurs lignes, et notamment les capteurs linéaires de type TDI (Time Delay Integration) qui peuvent comporter plusieurs lignes, voire plusieurs dizaines de lignes, destinées, par observation successive d'une même ligne d'image par plusieurs lignes de détecteurs à améliorer le rapport signal/bruit de la détection.

Pour des applications particulières, telles que par exemple l'observation de la terre à partir de satellites, on souhaite réaliser des capteurs linéaires de grande longueur, supérieure à celle qu'on sait réaliser sur une seule puce de silicium, et pour cela on peut aligner plusieurs puces bout-à-bout dans le sens de leur longueur.

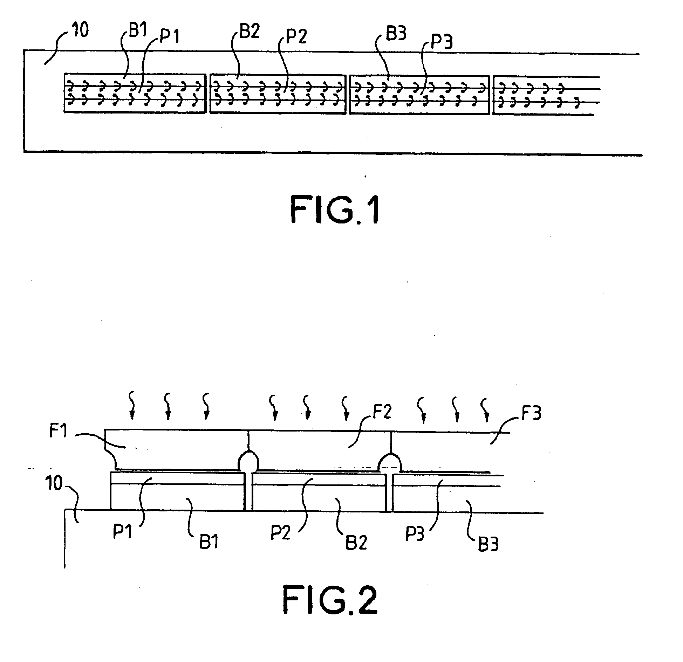

La figure 1 représente, en vue de dessus, un alignement, sur une platine 10, de plusieurs boîtiers B1, B2, B3...portant chacun une puce semiconductrice respective P1, P2, P3 ... en forme de barrette, chaque puce étant reliée électriquement à son boîtier par des fils soudés entre des plots de connexion de la puce et des plots de connexion du boîtier.

L'inconvénient de ce montage est la présence de zones aveugles : même si les points photosensibles arrivent pratiquement au bord de la puce et même si la puce arrive pratiquement au bord du boîtier, les zones de jonction à la frontière entre deux puces ne comportent pas de points photosensibles (ou pixels de détection d'image). En effet, les pixels ne peuvent guère arriver plus près qu'à une cinquantaine de micromètres du bord de la puce et la puce ne peut arriver au bord du boîtier qu'avec une tolérance du même ordre. Pour des pixels ayant un pas d'environ 10 micromètres, une dizaine de pixels risquent d'être absents à chaque zone d'aboutement de boîtiers adjacents. Ceci n'est pas acceptable car l'image globale reconstituée au fur et à mesure du déplacement relatif du capteur comporterait des colonnes noires dans le sens du défilement.

La figure 2 représente, en coupe latérale, une solution qui a été essayée pour résoudre cet inconvénient : l'optique de prise de vue projette l'image à détecter non pas directement sur le capteur photosensible mais sur la face plane d'entrée d'un ensemble de faisceaux de fibres optiques F1, F2, F3 ... ; les faisceaux de fibres F1, F2, F3 sont juxtaposés et ne laissent aucun vide entre eux du côté de leur face d'entrée ; mais chaque faisceau est déformé, par resserrement du côté tourné vers la puce, pour que sa face de sortie vienne occuper seulement la longueur utile de la barrette linéaire. On élimine ainsi les zones aveugles. Cette solution est très coûteuse, notamment en raison de l'extrême précision qui est requise dans la juxtaposition des faisceaux de fibres et dans la déformation de ces faisceaux pour que leur sortie occupe exactement la longueur active photosensible de chaque barrette.

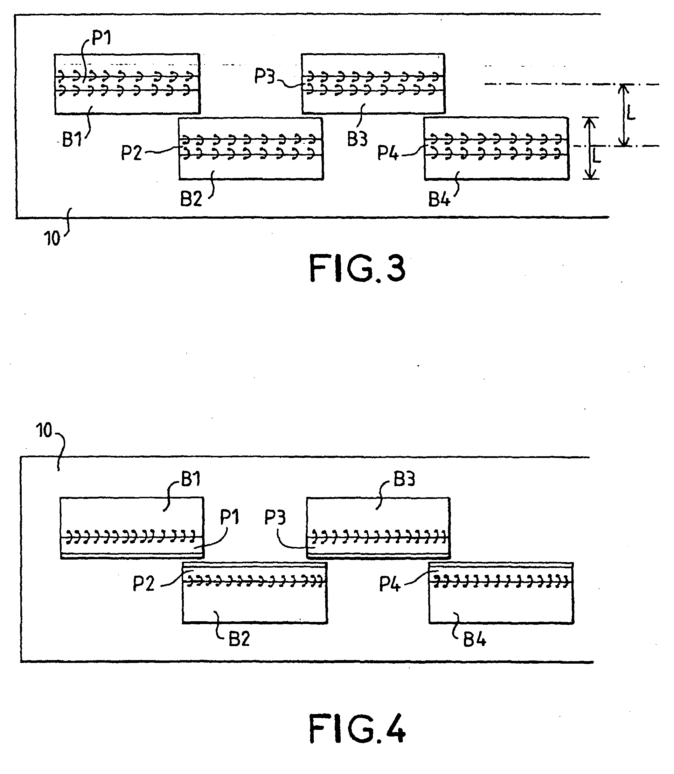

La figure 3 représente une solution plus pratique qui peut être envisagée : les puces sont aboutées mais en quinconce ; elles ne sont donc pas alignées, ou plus exactement elles sont divisées en deux groupes de puces alignées et les deux groupes forment deux alignements parallèles, chaque puce du deuxième groupe étant placée entre deux puces écartées du premier groupe mais décalée hors de l'alignement des puces du premier groupe. L'écartement entre deux puces d'un alignement est inférieur à la longueur du boîtier d'une puce. Les boîtiers s'appuyent donc les uns contre les autres à leur extrémité, le long d'un bord parallèle à la direction d'alignement ; les extrémités des puces adjacentes comportent des portions de zones de détection en recouvrement mutuel de manière qu'il n'y ait absolument aucune zone morte. La séparation des axes d'alignement des deux groupes est égale à la largeur L du boîtier. Elle est parfaitement connue, et, lors d'une prise de vue en défilement, en tenant compte de la vitesse de défilement V, on reconstruit une ligne d'image en combinant les informations fournies par deux puces adjacentes non pas au même instant mais avec un intervalle de temps L/V qui compense le fait que les puces ne voient pas la même ligne d'image au même moment.

Cette solution souffre des inconvénients liés à la nécessité de reconstruire l'image finale, avec des risques de distorsion et d'instabilité qui sont d'autant plus gênants que l'écart entre les deux alignements de puce est plus grand. Or l'écart est égal à la largeur du boîtier, soit plusieurs centimètres.

Une solution possible, pour limiter cet inconvénient, est représentée à la figure 4 : Les puces sont placées tout au bord du boîtier, tous les fils de liaison de la puce avec le boîtier étant reportés d'un seul côté de la puce. Les puces sont encore en quinconce et le signal qu'elles fournissent doit être traité pour effectuer une reconstruction tenant compte du décalage de l'axe d'alignement des puces, mais ce décalage n'est pratiquement plus que de la largeur de la puce et non plus la largeur du boîtier.

Malheureusement, cette solution est coûteuse car elle oblige à concevoir une puce particulière, ayant des plots de connexion d'un seul côté, et de plus elle peut obliger à utiliser deux composants différents selon que la puce fait partie de l'un ou de l'autre alignement car les puces sont alternativement retournées ; or le retournement n'est pas forcément compatible avec le fonctionnement de la puce. C'est le cas en particulier pour des barrettes multilinéaires fonctionnant en mode TDI ("Time Delay Integration") ou des barrettes d'imagerie multispectrales ayant plusieurs lignes de pixels correspondant à des couleurs ou des zones de spectre différentes. En effet, dans ces deux cas, le retournement de la puce pose des problèmes de traitement de signal. Cette solution est donc difficile à mettre en oeuvre.

Pour améliorer encore l'aboutement en quinconce, avec recouvrement mutuel des zones photosensibles pour éviter les zones aveugles, la présente invention propose principalement un capteur dont le boîtier, au lieu d'être simplement rectangulaire comme c'est le cas habituellement, comporte deux petites extensions latérales sensiblement de même largeur que la puce et de longueur sensiblement égale au recouvrement mutuel désiré entre puces. Ces extensions s'étendent dans le sens de la longueur de la puce. La puce recouvre pratiquement entièrement ces extensions (qui ne comportent pas de plots de connexion). Les extensions de deux boîtiers sont adjacentes (en contact physique ou presque en contact physique) par leur côté parallèle à l'alignement des puces. Il n'y a pas de plot de connexion sur le substrat dans la zone des extensions latérales.

On a donc un aboutement en quinconce, avec un entraxe égal à la largeur des puces ou à peu près, sans avoir besoin de concevoir un composant spécial (les plots peuvent en effet être situés des deux côtés de la puce) et sans avoir besoin de deux composants différents, un pour chacun des alignements, comme c'est le cas dans la disposition de la figure 4.

Par conséquent, on propose selon l'invention un capteur d'image comportant plusieurs barrettes linéaires de détection d'image associées pour former un capteur d'image linéaire de longueur supérieure à celle de chaque barrette, caractérisé en ce que les barrettes sont montées sur des boîtiers dont la surface supérieure a une forme de rectangle allongé pourvu, sur deux petits côtés opposés du rectangle, de deux extensions sensiblement recouvertes par les extrémités de la barrette, les boîtiers étant montés en quinconce et deux boîtiers étant adjacents le long d'une extension respective de chacun. Ces extensions ont une largeur plus faible que celle des petits côtés du rectangle. Il n'y a pas de plots de connexion sur les boîtiers, de sorte que ceux-ci peuvent être tous identiques et juxtaposés sans retournement.

Cependant, on peut aussi envisager une variante dans laquelle les puces débordent d'un boîtier rectangulaire sans que des extensions de ce boîtier rectangulaire les supportent. Cette variante est moins favorable car elle soumet les puces à des contraintes qui ne sont pas toujours compatibles avec des conditions d'environnement sévères, en particulier du point de vue des chocs et des vibrations ; d'autre part, la mise à la masse de la puce sur toute sa face arrière est moins bonne, ainsi que l'évacuation thermique.

Pour tenir compte de ces deux possibilités selon l'invention, on a formulé la définition générale suivante de l'invention : un capteur d'image de grande dimension fonctionnant par défilement relatif de l'image par rapport au capteur, comportant plusieurs puces monolithiques individuelles aptes à détecter chacune une portion d'image linéaire perpendiculaire au sens de défilement, les puces individuelles étant disposées en deux groupes, les puces d'un groupe étant alignées pour détecter des portions d'image alignées et les puces de l'autre groupe étant alignées pour détecter d'autres portions d'image alignées mais décalées par rapport aux puces du premier groupe dans la direction de défilement relatif, les puces du deuxième groupe étant disposées en quinconce par rapport aux puces du premier groupe de manière que toutes les puces du premier groupe soient situées à côté d'au moins une puce du deuxième groupe, les puces étant montées chacune sur un boîtier, des fils de connexion étant connectés entre des plots de connexion du boîtier et des plots de connexion à la surface supérieure de la puce, caractérisé en ce que la surface supérieure du boîtier, sur laquelle est montée la puce, comporte une zone principale dont la forme est un rectange allongé dont la longueur est inférieure à la longueur de la puce et dont la largeur est supérieure à celle de la puce, la totalité des plots de connexion étant situés le long de la puce à l'intérieur de ce rectangle, toutes les puces possédant deux extrémités débordant du rectangle, une extrémité débordante d'une puce étant adjacente, par un côté parallèle à l'alignement des puces, à un côté, également parallèle à l'alignement des puces, de l'extrémité débordante d'une autre puce. Les boîtiers sont tous identiques et sont juxtaposés sans retournement.

L'extrémité de puce déborde donc selon l'invention soit dans le vide soit sur une extension du boîtier prolongeant la zone rectangulaire dans la direction générale de la longueur du rectangle.

Dans la réalisation avec un boîtier rectangulaire à deux extensions situées sous les débordements de puce, on prévoit de préférence que la dimension de ces extensions, en longueur dans le sens de l'alignement comme en largeur dans le sens de défilement de l'image, est à peine supérieure à la longueur et la largeur de la partie débordante de puce qui recouvre cette extension. Seule une marge de tolérance de positionnement est prévue, par exemple de l'ordre de 50 à 100 micromètres autour de la puce est prévue pour tenir compte de risques de mauvais positionnement de la puce sur le boîtier.

D'autres caractéristiques et avantages de l'invention apparaîtront à la lecture de la description détaillée qui suit et qui est faite en référence aux dessins annexés dans lesquels :
- les figures 1 à 4, déjà décrites, représentent différentes possibilités de montage de barrettes linéaires pour constituer un capteur de grande dimension ;
- la figure 5 représente une première possibilité d'aboutement de barrettes selon l'invention, avec un boîtier pourvu de deux extensions et une puce recouvrant ces extensions ;
- la figure 6 représente plus en détail un boîtier selon l'invention;
- la figure 7 représente une variante de réalisation avec un boîtier rectangulaire sans extension et une puce débordante.

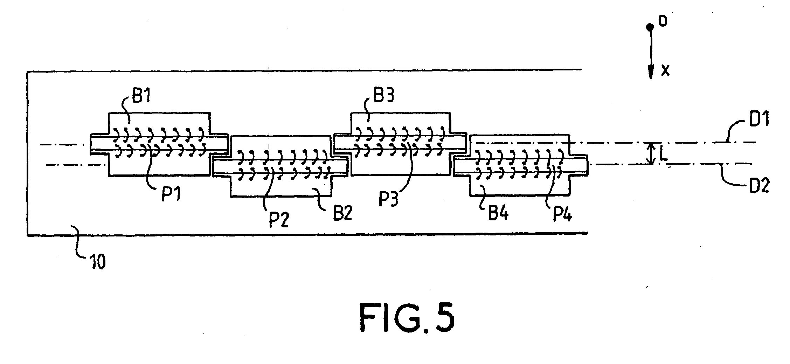

Sur la figure 5 on voit le capteur linéaire selon l'invention, avec plusieurs puces linéaires aboutées en quinconce avec recouvrement partiel aux extrémités des puces. Les puces en quinconce forment deux alignements parallèles dont les axes sont des droites D1 et D2 perpendiculaires au sens de défilement Ox de l'image par rapport au capteur.

Le premier alignement, comporte les puces linéaires de rang impair, P1, P3, etc., portées chacune par un boîtier respectif B1, B3, et la ligne passant linéairement par le centre des puces est la droite D1. Le deuxième alignement comprend les puces de rang pair P2, P4, portées par les boîtiers respectifs B2, B4, etc. et leur ligne centrale est la droite D2.

Les droites D1 et D2 sont séparées par une distance L qui est égale ou légèrement supérieure (de 100 à 200 micromètres par exemple) à la largeur des puces (largeur comptée selon la direction Ox, égale par exemple à quelques millimètres). Cette largeur est bien inférieure à celle des boîtiers qui les supportent (un ou plusieurs centimètres), de sorte que l'écartement L des droites D1 et D2 est bien inférieur à celui qui existe dans la figure 3. Les puces sont toutes identiques et montées de manière identique sur leur boîtier, contrairement au cas de la figure 4.

Les boîtiers, tous identiques, ont une forme générale allongée puisque les puces sont des barrettes linéaires (une ligne ou plusieurs lignes), ils ont donc deux grands côtés parallèles aux droites D1 et D2 et deux petits côtés aux extrémités de ces grands côtés. Les petits côtés comportent chacun une extension ou «oreille» qui prolonge le boîtier dans la direction des droites D1 et D2. La puce montée sur un boîtier recouvre l'essentiel de la surface supérieure de ces extensions, une légère marge (50 à 100 micromètres) pouvant cependant être prévue sur tous les bords de l'extension pour que le boîtier déborde au delà de la surface de la puce dans la zone de l'extension.

Les boîtiers en quinconce s'appuient les uns contre les autres par leurs extensions : les boîtiers sont en contact le long de bords parallèles aux droites D1 et D2. D'autre part, l'extension d'un boîtier peut s'appuyer contre un petit côté du boîtier là où il n'y a pas d'extension.

Les boîtiers sont donc positionnés très précisément les uns par rapport aux autres dès lors que les dimensions (largeur et longueur) des extensions sont précisément usinées.

La largeur des extensions (dans la direction de défilement Ox) étant à peine supérieure à la largeur de la puce, les liaisons entre la puce et le boîtier se font exclusivement dans la zone principale de la surface supérieure du boîtier et pas dans les extensions : il n'y a pas de plot de connexion sur la surface supérieure du boîtier dans les extensions.

Autrement dit, la surface supérieure du boîtier a une forme rectangulaire allongée avec deux grands côtés et deux petits côtés et une extension sur chaque petit côté, débordant du rectangle, et les plots de connexion sont tous situés à l'intérieur du rectangle, lequel constitue la zone principale du boîtier, l'extension constituant une zone auxiliaire.

Les puces en quinconce se recouvrent mutuellement dans la zone des extensions, c'est-à-dire que la puce comporte des points photosensibles utiles dans la zone des extensions, et les points photosensibles d'une puce de rang impair voient une ligne d'image donnée un peu avant que les points photosensibles d'une puce adjacente de rang pair voient la même ligne d'image. Si la vitesse de défilement est V et si la distance entre les droites D1 et D2 est L, la ligne de rang pair voit la même ligne d'image après un temps L/V. Lors de la reconstruction d'image pour avoir une image en deux dimensions, on prendra soin d'associer les signaux fournis à un instant t par les puces de rang impair aux signaux fournis par les puces de rang pair à l'instant t+L/V.

Les points photosensibles qui sont en recouvrement mutuel permettent de n'avoir aucune zone aveugle dans la ligne de barrettes de points photosensibles : la plupart des points d'une ligne d'image sont vus par une seule barrette, mais dans la zone de recouvrement, les points sont vus deux fois, une fois à l'instant t et une fois à l'instant t+L/V ; un traitement de signal simple permet de donner une seule valeur à ces points, valeur qui peut être celle qui est lue par l'une ou l'autre puce ou la moyenne des deux valeurs lues, éventuellement pondérée en fonction de la position du point sur la barrette.

La longueur des extensions peut correspondre à la longueur nécessaire pour placer sur l'extension quelques dizaines de points photosensibles. Par exemple, pour une barrette de plusieurs centimètres de long et des points photosensibles au pas de 10 micromètres, on peut prévoir des extensions de 1 millimètre. Dans un exemple de capteur d'imagerie spatiale, la longueur du boîtier peut être de 5 centimètres, la largeur du boîtier peut être de 1 à 2 cm, et la largeur de la puce peut être de 2 ou 3 millimètres.

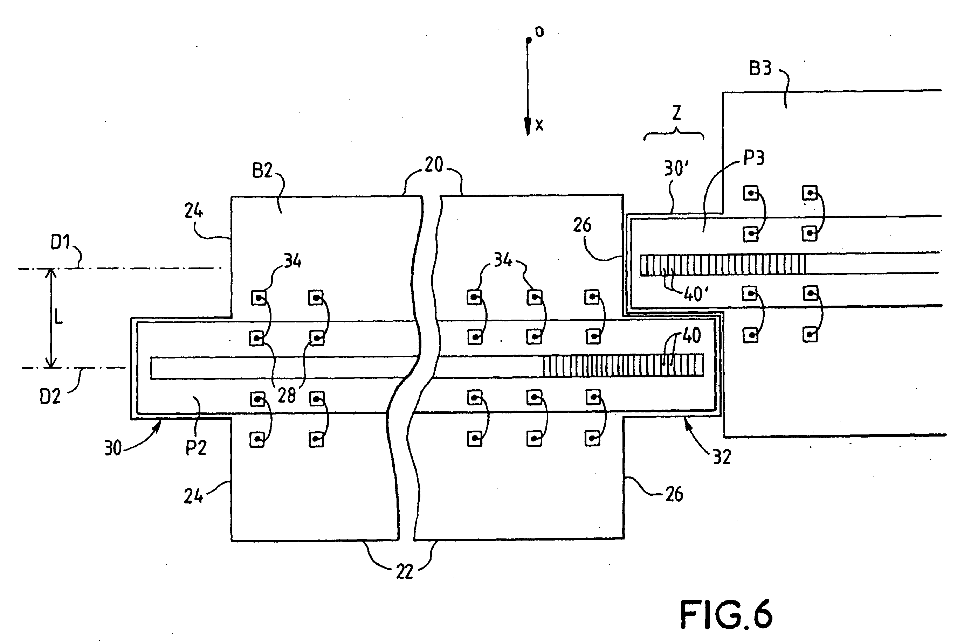

Sur la figure 6 on voit le détail, vu de dessus, d'un boîtier B2 de rang pair abouté à un boîtier B3 de rang impair.

La forme générale de la partie principale de la surface supérieure du boîtier est rectangulaire allongée, avec deux grands côtés 20 et 22 et deux petits côtés 24 et 26, et les petits côtés sont pourvus de deux extensions 30 et 32, respectivement à gauche et à droite du boîtier, qui s'étendent parallèllement à la direction d'allongement du rectangle.

La puce P2, en forme de barrette linéaire, est reliée électriquement au boîtier B2 par des fils de connexion reliant des plots 28 de la-puce à des plots 34 du boîtier. C'est exclusivement sur la surface principale rectangulaire du boîtier, délimitée par les grands côtés 20 et 22 et les petits côtés 24 et 26, qu'on trouve des plots de connexion électrique 34. Il n'y a pas de plots de connexion de fils sur les extensions 30 et 32 qui, comme on le voit, sont presque entièrement recouvertes par la puce. On pourrait à la rigueur envisager qu'il y ait des plots 28 sur la puce dans la zone de l'extension, ces fils aboutissant sur des plots 34 du boîtier dans la zone principale.

Les boîtiers B2 et B3 sont aboutés par l'intermédiaire de leurs extensions respectives, extension droite 32 pour le boîtier B2, extension gauche 30' pour le boîtier B3 : l'extrémité gauche de l'extension 30' du boîtier B3 vient s'appuyer sur le petit côté droit 26 du boîtier B2 (ou vient presque s'appuyer si on préfère qu'il n'y ait pas complètement un contact mécanique à cet endroit) ; de même l'extension 32 du boîtier B2 vient s'appuyer (ou presque) contre le petit côté gauche du boîtier B3 ; et pour définir l'espacement entre les lignes de puces de rang pair et de rang impair, les extensions 32 et 30' viennent s'appuyer (ou presque) l'une contre l'autre dans la direction Ox par leurs bords latéraux qui sont perpendiculaires à la direction de défilement (bords parallèles à la direction d'allongement des barrettes) et qui sont en regard l'un de l'autre lorsque les boîtiers sont mis en place en quinconce.

L'espacement L entre les axes d'allongement des barrettes de points photosensibles des deux alignements de puces est égal à la largeur de l'extension, la puce étant placée au centre de l'extension pour que tous les ensembles puce+boîtier soient identiques. La largeur de l'extension est égale à la largeur de la puce, à quoi on peut rajouter une marge de tolérance de positionnement de quelques dizaines de micromètres (de préférence environ 50 micromètres à 200 micromètres, par exemple 50 ou 100 micromètres) tout autour de la puce. La marge à l'extrémité de l'extension peut être plus élevée dès lors qu'il y a un nombre suffisant de points photosensibles dans l'extension pour assurer un recouvrement d'image prise par deux puces adjacentes.

On a représenté sur la figure 6 la zone Z dans laquelle des points photosensibles 40 et 40', appartenant respectivement aux puces P2 et P3, sont en recouvrement mutuel, c'est-à-dire qu'ils peuvent voir (mais à des moments différents) les mêmes points d'une ligne d'image défilant dans la direction Ox perpendiculaire aux lignes de points photosensibles.

Comme on l'a dit précédemment, chaque puce en forme de barrette allongée peut comporter une ou plusieurs lignes de points photosensibles 40. Il y a notamment plusieurs lignes dans les barrettes de type TDI.

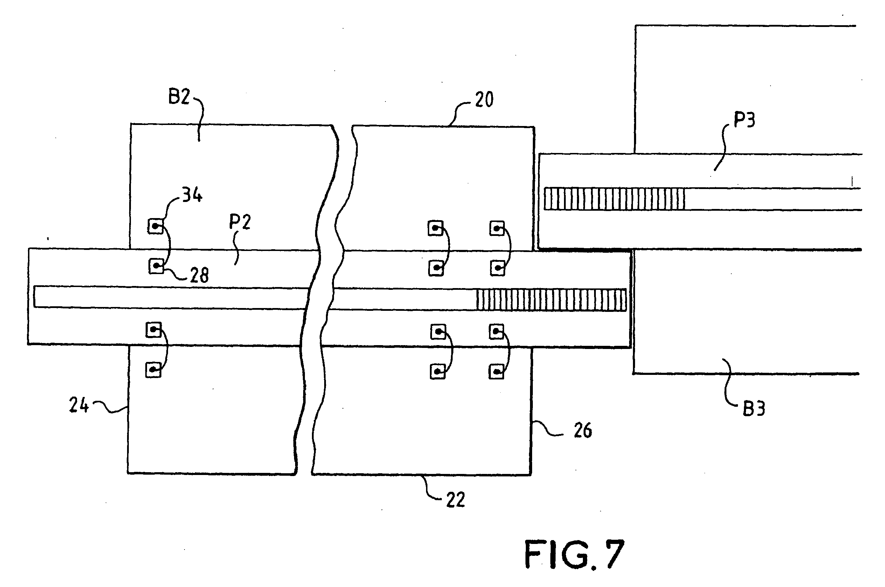

La figure 7 représente une variante de réalisation, moins intéressante que celle de la figure 6 en raison de la plus grande sensibilité du montage aux chocs et vibrations et en raison des moins bonnes performances thermiques et électriques des capteurs. Dans cette variante, il n'y a pas d'extension latérale sur le boîtier, le boîtier est exactement rectangulaire avec deux grands côtés 20 et 22 et deux petits côtés 24 et 26, mais la puce déborde latéralement à droite et à gauche du boîtier de sorte que c'est la puce elle-même qui constitue l'extension servant à l'aboutement.

Les boîtiers en quinconce sont aboutés en faisant se toucher les puces par leurs bords latéraux débordants. L'extrémité d'une puce touche (ou touche presque) un petit côté du boîtier adjacent, et un bord latéral débordant de la puce touche (ou touche presque) un bord latéral débordant de la puce adjacente. L'espacement entre les axes de la ligne de puces de rang pair et de la ligne de puces de rang impair est dans ce cas égal à la largeur des puces. Le recouvrement d'image se fait par les parties débordantes des puces adjacentes qui voient les mêmes points d'une ligne d'image.

L'invention est particulièrement applicable à des barrettes multilinéaires (plusieurs lignes de pixels) fonctionnant en mode TDI ("Time Delay Integration") où les signaux observés par une ligne sont ajoutés aux signaux observés par la ligne précédente en synchronisme avec le défilement de la barrette ; elle est aussi particulièrement applicable à des barrettes multispectrales où plusieurs lignes de pixels sont prévues, chaque ligne correspondant à une couleur ou une bande spectrale donnée ; l'invention est applicable plus généralement à l'imagerie de haute résolution, notamment pour l'imagerie spatiale.

## Revendications

1. Capteur d'image de grande dimension fonctionnant par défilement relatif de l'image par rapport au capteur, comportant plusieurs puces monolithiques individuelles (P1, P2, P3) aptes à détecter chacune une portion d'image linéaire perpendiculaire au sens de défilement (Ox), les puces individuelles étant disposées en deux groupes, les puces d'un groupe étant alignées pour détecter des portions d'image alignées et les puces de l'autre groupe étant alignées pour détecter d'autres portions d'image alignées mais décalées par rapport aux puces du premier groupe dans la direction de défilement relatif, les puces du deuxième groupe étant disposées en quinconce par rapport aux puces du premier groupe de manière que toutes les puces du premier groupe soient situées à côté d'au moins une puce du deuxième groupe, les puces étant montées chacune sur un boîtier, des fils de connexion étant connectés entre des plots de connexion du boîtier et des plots de connexion à la surface supérieure de la puce, **caractérisé en ce que** la surface supérieure du boîtier, sur laquelle est montée la puce, comporte une partie principale dont la forme est un rectange allongé dont la longueur est inférieure à la longueur de la puce et dont la largeur est supérieure à celle de la puce, la totalité des plots de connexion du boîtier (34) étant situés le long de la puce à l'intérieur de ce rectangle, toutes les puces possédant deux extrémités débordant du rectangle, une extrémité débordante d'une puce étant adjacente, par un côté parallèle à l'alignement des puces, à un côté, également parallèle à l'alignement des puces, de l'extrémité débordante d'une autre puce, les boîtiers étant identiques et juxtaposés sans retournement.

2. Capteur d'image selon la revendication 1, **caractérisé en ce que** le boîtier comporte deux extensions (30, 32) adjacentes à la partie principale rectangulaire et de largeur inférieure à la largeur de cette dernière, cette extension s'étendant sous la partie de puce débordante.

3. Capteur d'image selon la revendication 2, **caractérisé en ce que** les extensions sont légèrement plus larges et plus longues que cette partie de puce débordante sous laquelle elles sont situées.

4. Capteur d'image selon la revendication 3, **caractérisé en ce que** la largeur de l'extension du boîtier est supérieure d'environ 50 micromètres à 200 micromètres à la largeur de la puce.

5. Capteur d'image selon l'une des revendications 2 à 4, **caractérisé en ce qu'**un boîtier est en contact avec l'extension d'un boîtier adjacent.

6. Capteur d'image selon l'une des revendications 1 et 2, **caractérisé en ce que** les puces de boîtiers adjacents sont en contact par un bord parallèle à l'alignement des puces.

7. Capteur d'image selon l'une des revendications 1 à 6, **caractérisé en ce que** les parties de puce débordant du rectangle allongé comportent des éléments photosensibles pour établir un recouvrement d'image entre puces adjacentes.

## Claims

1. Large-dimension image sensor operating by relative translation of the image with respect to the sensor, comprising a plurality of individual monolithic chips (P1, P2, P3) each capable of detecting a linear image portion perpendicular to the translation direction (Ox), the individual chips being arranged in two groups, the chips of one group being aligned in order to detect aligned image portions and the chips of the other group being aligned in order to detect other image portions which are aligned but offset with respect to the chips of the first group in the relative translation direction, the chips of the second group being arranged in a staggered fashion with respect to the chips of the first group so that all the chips of the first group lie beside at least one chip of the second group, the chips each being mounted on a package, connection wires being connected between connection terminals of the package and connection terminals on the upper surface of the chip, **characterized in that** the upper surface of the package, on which the chip is mounted, comprises a principal part the shape of which is an elongate rectangle whose length is less than the length of the chip and whose width is greater than that of the chip, all of the connection terminals of the package (34) lying inside this rectangle along the chip, all the chips having two ends protruding from the rectangle, a protruding end of a chip being adjacent, via a side parallel to the row of chips, to a side likewise parallel to the row of chips of the protruding edge of another chip, the packages being identical and juxtaposed without reversal.

2. Image sensor according to Claim 1, **characterized in that** the package comprises two extensions (30, 32) adjacent to the rectangular principal part and of lesser width than the width of the latter, this extension extending under the protruding chip part.

3. Image sensor according to Claim 2, **characterized in that** the extensions are slightly wider and longer than this protruding chip part under which they lie.

4. Image sensor according to Claim 3, **characterized in that** the width of the extension of the package is from about 50 micrometers to 200 micrometers more than the width of the chip.

5. Image sensor according to one of Claims 2 to 4, **characterized in that** a package is in contact with the extension of an adjacent package.

6. Image sensor according to one of Claims 1 and 2, **characterized in that** the chips of adjacent packages are in contact via an edge parallel to the alignment of the chips.

7. Image sensor according to one of Claims 1 to 6, **characterized in that** the chip parts protruding from the elongate rectangle comprise photosensitive elements for establishing an image overlap between adjacent chips.

## Patentansprüche

1. Großdimensionierter Bildsensor, der mit relativen Durchlauf des Bilds bezüglich des Sensors arbeitet, mit mehreren monolithischen Einzelchips (P1, P2, P3), die je einen linearen Bildabschnitt lotrecht zur Durchlaufrichtung (Ox) erfassen können, wobei die Einzelchips in zwei Gruppen angeordnet sind, wobei die Chips einer Gruppe ausgerichtet sind, um ausgerichtete Bildabschnitte zu erfassen, und die Chips der anderen Gruppe ausgerichtet sind, um andere ausgerichtete, aber bezüglich der Chips der ersten Gruppe in der relativen Durchlaufrichtung verschobene Bildabschnitte zu erfassen, wobei die Chips der zweiten Gruppe bezüglich der Chips der ersten Gruppe so versetzt angeordnet sind, dass alle Chips der ersten Gruppe sich neben mindestens einem Chip der zweiten Gruppe befinden, wobei die Chips je auf ein Gehäuse montiert sind, wobei Anschlussdrähte zwischen Anschlusskontakten des Gehäuses und Anschlusskontakten an der Oberfläche des Chips angeschlossen sind, **dadurch gekennzeichnet, dass** die Oberfläche des Gehäuses, auf die der Chip montiert ist, einen Hauptbereich aufweist, dessen Form ein längliches Rechteck ist, dessen Länge geringer ist als die Länge des Chips und dessen Breite größer ist als diejenige des Chips, wobei alle Anschlusskontakte (34) des Gehäuses sich entlang des Chips im Inneren dieses Rechtecks befinden, wobei alle Chips zwei über das Rechteck überstehende Enden aufweisen, wobei ein überstehendes Ende eines Chips über eine Seite parallel zur Ausrichtung der Chips einer ebenfalls zur Ausrichtung der Chips parallelen Seite des überstehenden Endes eines anderen Chips benachbart ist, wobei die Gehäuse gleich und ohne Umkehr nebeneinander angeordnet sind.

2. Bildsensor nach Anspruch 1, **dadurch gekennzeichnet, dass** das Gehäuse zwei Verlängerungen (30, 32) aufweist, die dem rechteckigen Hauptbereich benachbart und von einer geringeren Breite als die Breite dieses letzteren sind, wobei diese Verlängerung sich unter dem überstehenden Chipbereich erstreckt.

3. Bildsensor nach Anspruch 2, **dadurch gekennzeichnet, dass** die Verlängerungen geringfügig breiter und länger sind als dieser überstehende Chipbereich, unter dem sie sich befinden.

4. Bildsensor nach Anspruch 3, **dadurch gekennzeichnet, dass** die Breite der Verlängerung des Gehäuses um etwa 50 Mikrometer bis 200 Mikrometer größer ist als die Breite des Chips.

5. Bildsensor nach einem der Ansprüche 2 bis 4, **dadurch gekennzeichnet, dass** ein Gehäuse mit der Verlängerung eines benachbarten Gehäuses in Kontakt steht.

6. Bildsensor nach einem der Ansprüche 1 und 2, **dadurch gekennzeichnet, dass** die Chips von benachbarten Gehäusen über einen zur Ausrichtung der Chips parallelen Rand in Kontakt stehen.

7. Bildsensor nach einem der Ansprüche 1 bis 6, **dadurch gekennzeichnet, dass** die über das längliche Rechteck überstehenden Chipbereiche fotoempfindliche Elemente aufweisen, um eine Bildüberdeckung zwischen benachbarten Chips herzustellen.
